# EUROPEAN PATENT SPECIFICATION

(11) **EP 0 452 865 B1**
(45) Date of publication and mention of the grant of the patent: **24.07.1996**
(21) Application number: 91106021.8
(22) Date of filing: 15.04.1991
(51) Int. Cl.: H04N 1/00, F16H 61/00

(54) **Facsimile apparatus comprising cordless telephone set**
Faksimile-Gerät mit integrierten, schnurlosem Telefon
Appareil fac-similé contenant une installation téléphonique sans fil

(30) Priority: 18.04.1990 JP 104191/90
(43) Date of publication of application: 23.10.1991
(73) Proprietor: SHARP KABUSHIKI KAISHA, Osaka 545 (JP)
(72) Inventor: Hayashi, Motohiko, Yamatokoriyama-shi, Nara-ken (JP)
(74) Representative: TER MEER - MÜLLER - STEINMEISTER & PARTNER

(56) References cited:
- EP-A- 0 399 408
- US-A- 4 800 439
- US-A- 4 837 812

## Description

### BACKGROUND OF THE INVENTION

### Field of the Invention

The present invention relates to a facsimile apparatus capable of performing both aural communication and image communication via a telephone line in accordance with the precharacterizing part of claim 1. Such a facsimile apparatus is known from US-A-4800439.

### Description of the Background Art

In accordance with the recent spread of facsimile apparatus and cordless telephone sets, facsimile apparatus incorporating cordless telephone sets have been developed. In such a facsimile apparatus, there are times when a remote unit is left at an off-hook condition after termination of voice communication using the remote unit of the cordless telephone set via a telephone line. There are also times when the conversation button of the remote unit is pressed to perform calling operation from the cordless telephone set and left at the off-hook condition for a long time. A busy signal or a howler signal is transmitted from an exchanger to warn the user in such a case. These signals are converted into a calling tone in a telephone set to be provided from the speaker of the handset.

In a conventional facsimile apparatus incorporating a cordless telephone set, no means were implemented to force the remote unit to an on-hook condition when a busy signal or a howler signal was detected. Unless an operator near the remote unit of the cordless telephone set catches a busy signal or a howler signal provided from the speaker of the handset and turns the remote unit to an on-hook condition, the remote unit was left at an off-hook condition. As a result, the reception operation of the facsimile apparatus was inhibited even though equipped with facsimile communication function due to the remote unit held in an off-hook condition.

US-A-4800439 discloses a data communication apparatus adapted to perform data communication and speech communication via a telephone line in accordance with the precharacterizing part of claim 1. A detector is arranged for detecting a signal from a calling station indicating that the calling station is in a data communication mode and a controller is arranged for switching during speech communication in the speech communication mode the data communication apparatus from the speech communication mode to the data communication mode in response to the detection of the signal by the detector. This publication does not specifically address problems of the communication with and by a combined facsimile-speech communication apparatus having a cordless telephone set.

### SUMMARY OF THE INVENTION

An object of the present invention is to prevent inhibition of the reception operation of a facsimile apparatus in a facsimile apparatus incorporating a cordless telephone set.

Another object of the present invention is to prevent inhibition of the reception operation of a facsimile apparatus due to careless handling of a remote unit in a facsimile apparatus incorporating a cordless telephone set.

The above objects are solved in accordance with the present invention by a facsimile apparatus capable of performing both aural transmitting and receiving communication and image transmitting and receiving communication via a telephone line, comprising a telephone unit with a handset, a hook switch, communication condition detecting means and of-hook detecting means for detecting the off-hook condition of the handset which is characterized in that the communication condition detecting means are arranged for detecting a signal transmitted from an exchanger indicating that the telephone line is not under an aural or image communication condition, and
on-hook setting means are provided for setting the handset to an on-hook condition, when said communication condition detecting means determines that the telephone line is not under communication condition and when the off-hook detecting means detects an off-hook condition.

When the communication condition detecting device detects a signal provided from an exchanger indicating that the telephone line is not under a communicating condition and when the off-hook detecting device detects that the handset is at an off-hook condition, the handset is automatically set to the on-hook condition. The handset is not left at an off-hook condition for a long time so that the reception operation of the facsimile is not inhibited.

Preferably, the first communicating device includes a cordless telephone set, and the handset includes the handset of the remote unit of the cordless telephone set.

The on-hook/off-hook setting condition of the remote unit is carried out by operating only a button. A facsimile apparatus including a cordless telephone set can be provided that does not have the reception operation of the facsimile inhibited by careless handling of the remote unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram schematically showing a facsimile apparatus comprising a cordless telephone set according to the present invention.

Fig. 2 is a block diagram showing in detail a base unit and the main body constituted by a facsimile communication portion of the facsimile apparatus comprising telephone function according to the present invention.

Fig. 3 is a circuit diagram showing the structure of a NCU and its major peripheries of Fig. 2.

Figs. 4 and 5 are flow charts for explaining the operation of the facsimile apparatus.

### DESCRIPTION OF THE PREFERRED EMBODIMENTS

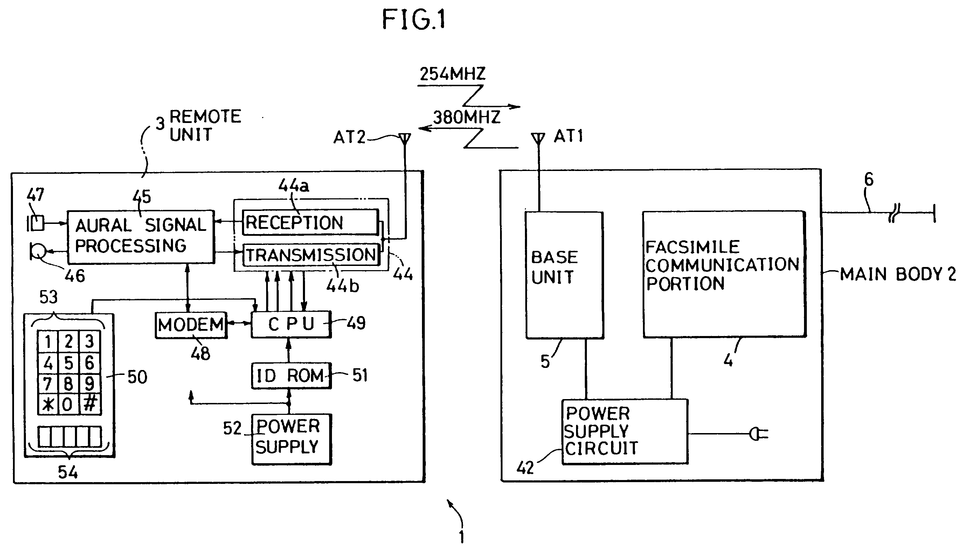

Referring to Fig. 1, a facsimile apparatus 1 having a cordless telephone set according to the present invention comprises a main body 2 connected to a telephone line 6, and a remote unit 3 connected to main body 2 by radio communication. Main body 2 comprises a facsimile communication portion 4, a base unit 5 connected to remote unit 3 by radio communication, and a power supply circuit 42 for providing power supply to facsimile communication portion 4 and base unit 5.

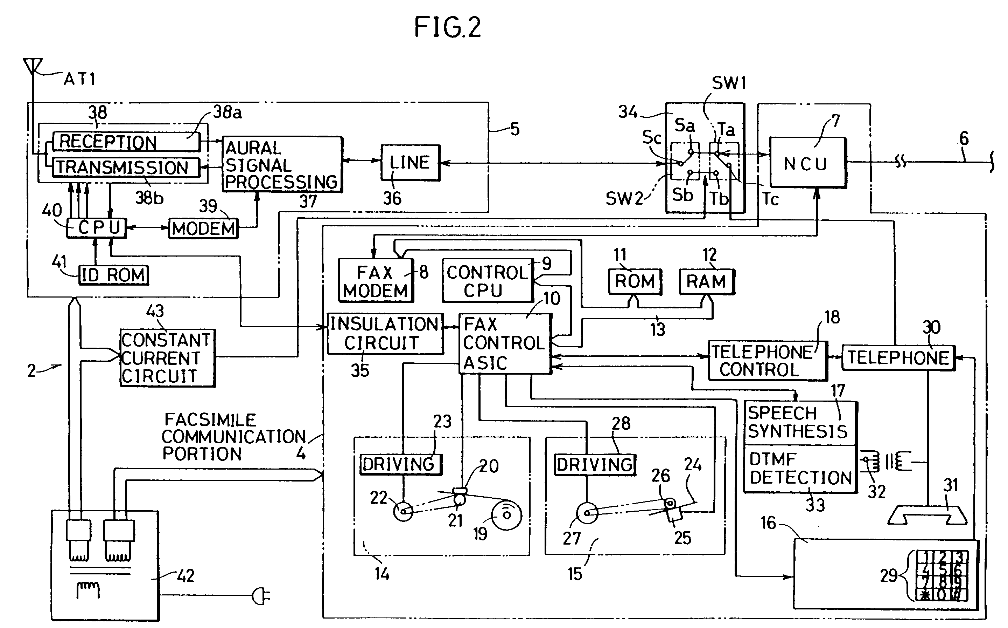

The structure and the operation of main body 2 according to the present invention will be explained hereinafter with reference to Fig. 2. Referring to Fig. 2, telephone line 6 is connected to an NCU (Network Control Unit) of facsimile communication portion 4. NCU 7 comprises a CML (Connect Modem to Line) relay for a terminating signal detecting circuit (not shown) to connect a FAX modem 8 to telephone line 6. NCU 7 supplies the signal received via telephone line 6 to FAX modem 8. FAX modem 8, a control CPU 9, a FAX control ASIC 10 controlling the entire facsimile apparatus, a ROM 11 and a RAM 12 are interconnected by a data bus 13. Control CPU 9 identifies the signal from FAX modem 8 to control FAX control ASIC 10. FAX control ASIC 10 controls a recording device 14, a reading device 15, an operation panel 16, a speech synthesis circuit 17, and a telephone control portion 18 according to the output of control CPU 9. Programs required for various control are stored in ROM 11. Data used at the time of various processing operation are stored in RAM 12. A work area is also set in RAM.

Recording device 14 records the received image data on a record sheet 19. A record head 20 is pressed against a roller 21 with record sheet 19 therebetween. Record sheet 19 is recorded according to a recording signal from FAX control ASIC 10. Roller 21 is rotated by a motor 22, whereby record sheet 19 is forwarded in synchronism with the recording speed of record head 20. A driving circuit 23 controls motor 22 according to a control signal from FAX control ASIC 10.

Reading device 15 optically reads the original image of an original 24. Original 24 is pressed against a reading sensor 25 such as a CCD (Charge Coupled Device) by a roller 26. Roller 26 is rotated by driving a motor 27, whereby original 24 is forwarded to be read by reading sensor 25. A driving circuit 28 controls motor 27 according to a control signal from FAX control ASIC 10.

Operation panel 16 comprises a ten-key 29. A PB (Push Button) signal generated by operating ten-key 29 is supplied to a telephone portion 30. Telephone portion 30 carries out the calling operation according to the PB signal from operation panel 16. Telephone portion 30 is provided with a handset 31 for talking. A speech synthesis circuit 17 and a DTMF detector 33 are connected between telephone portion 30 and handset 31 via a transformer 32. DTMF (Dual Tone Multi Frequency) is a signal of a combination of particular frequencies indicating the numeric values of a telephone number, the priority rank, or the end of a signal.

Various aural messages synthesized by speech synthesis circuit 17 are provided to an external line or a remote unit 3 from the speaker of handset 31 and through telephone portion 30. DTMF detector 33 detects a DP signal or a PB signal received by telephone portion 30 to provide that signal to FAX control ASIC 10. Telephone portion 30 is controlled by a telephone control portion 18.

FAX control ASIC 10 carries out transmission/reception of a signal to or from base unit 5 via an insulation circuit 35 such as a photocoupler.

An internal/external line switcher 34 carries out the switching of an internal line and an external line among base unit 5, telephone line 6 and telephone portion 30. Internal/external line switcher 34 comprises switches SW1 and SW2.

Terminal Ta of switch SW1 is connected to terminal Sa of switch SW2. Terminal Tb of switch SW1 is connected to terminal Sb of switch SW2. Switch SW1 has terminal Ta connected to NCU 7, and terminal Tc connected to telephone portion 30. Base unit 5 is connected to terminal Sc of switch SW2. Base unit 5 and telephone portion 30 are capable of communication with the external line by connecting terminal Ta to terminal Tc in switch SW1, and terminal Sa to terminal Sc in switch SW2. Telephone portion 30 is capable of communication with the external line by connecting terminal Tb to Tc in switch SW1. Internal line communication is capable between base unit 5 and telephone portion 30 by connecting terminal Tb to terminal Tc in switch SW1 and terminal Sb to terminal Sc in switch SW2.

The structure of base unit 5 will be explained hereinafter. A line circuit 36 is connected to terminal Sc of internal/external line switcher 34. Line circuit 36 is provided with a speech network for controlling the transmission and reception of an aural signal through the handset, and a dialer to generate a DT signal or a PB signal for calling the telephone set of the called side. An aural signal processing circuit 37 is connected to line circuit 36. Aural signal processing circuit 37 comprises a limiter for controlling the amplitude value of the voltage and a compounder (a compressor circuit and an expander circuit) for compressing/expanding an aural signal. The processing of aural signals received via line circuit 36 and transmission/reception circuit 38 are carried out in aural signal processing circuit 37. The received control signal is supplied to a CPU 40 via a modem 39.

CPU 40 controls base unit 5 and remote unit 3 according to a control signal provided via a modem 39, a control signal provided from transmission/reception circuit 38, and a control signal provided from FAX control ASIC 10 via insulation circuit 35.

An IDROM 41 is stored with ID (identification) codes for each cordless telephone set specified by the Minister of Posts and Telecommunications. At the time of connection of radio line, an ID code is transmitted to remote unit 3, whereby the ID code is verified so that signals are not sent to other remote units.

Transmission/reception circuit 38 comprises a receiving circuit 38a and a transmitting circuit 38b. Receiving circuit 38a demodulates a reception signal received by antenna AT1 to provide that signal to aural signal processing circuit 37 and CPU 40. Transmitting circuit 38b modulates/demodulates a signal provided from aural signal processing circuit 37 and CPU 40 to transmit a signal to a remote unit from antenna AT1 at a frequency of, for example, 380MHz (refer to Fig. 1).

Main body 2 and base unit 5 of facsimile apparatus 1 are provided with power from power supply circuit 42. Power from power supply circuit 42 is also supplied to a constant current circuit 43. Constant current circuit 43 supplies the direct constant current to internal/external line switcher 34 to provide direct current to the communication path for internal line talking.

The structure of remote unit 3 will be explained hereinafter with reference to Fig. 1. The reception signal received by an antenna AT2 is supplied to a receiving circuit 44a of transmission/reception circuit 44 and is demodulated. The aural signal is supplied to aural signal processing circuit 45. The control signal is supplied to a CPU 49. A transmitting circuit 44b modulates the aural signal and the control signal from aural signal processing circuit 45 and CPU 49 to send the signal from antenna AT2 to base unit 5 at, for example, 254MHz. CPU 49 controls remote unit 3 according to the control signal from receiving circuit 44a, the control signal supplied via modem 48, and key pulses from operation panel 50.

ID codes for each cordless telephone set specified by the Minister of Posts and Telecommunications are stored in an IDROM 51. At the time of connection of radio line, an ID code is transmitted to base unit 5 to verify the ID code.

Aural signal processing circuit 45 processes an aural signal from transmission/reception circuit 44 and a control signal from CPU 49 via modem 48 to provide these signals from a telephone transmitter 46. Aural signal processing circuit 45 processes the aural signal from a telephone receiver 47 to provide that signal to transmitting circuit 44b of transmission/reception circuit 44. Operation panel 50 comprises a ten-key 53 and a mode specifying key 54. Each key has a separate frequency signal which is supplied to CPU 49. Remote unit 3 is power supplied by a power supply 52.

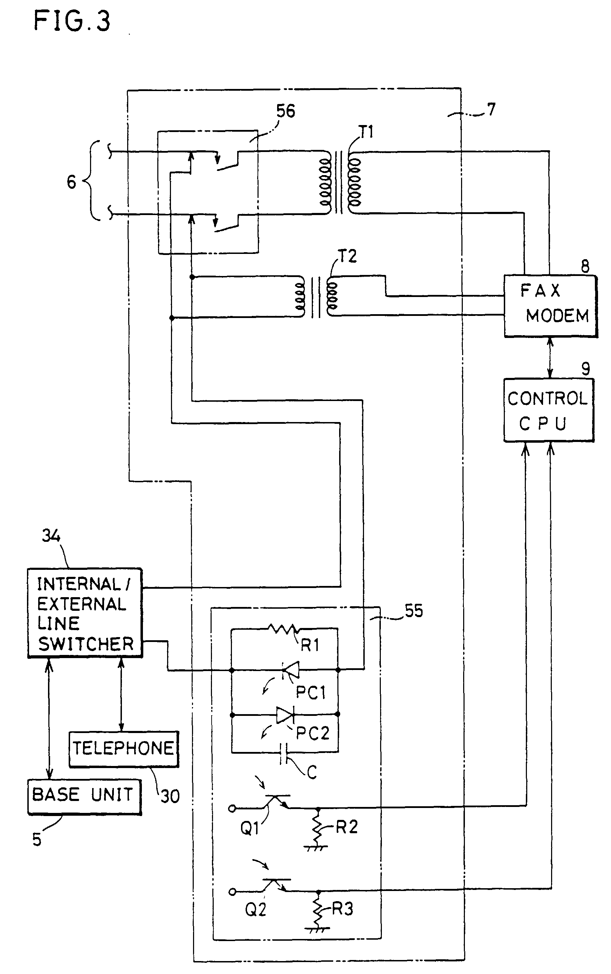

Referring to Fig. 3, telephone line 6 is connected to FAX modem 8 via a CML relay 56 and a transformer Tl. Telephone line 6 is connected to base unit 5 and telephone portion 30 via internal/external line switcher 34. A telephone line monitoring transformer T2 is connected to telephone line 6. Telephone line monitoring transformer T2 is connected to modem 8. Accordingly, various control signals sent to telephone line 6 are transmitted to modem 8 via telephone line monitoring transformer T2, whereby the telephone line condition is determined by CPU 9.

A hook signal detecting circuit 55 is provided between internal/external line switcher 34 and telephone line monitoring transformer T2. Hook signal detecting circuit 55 comprises photocouplers PC1 and PC2 connected in reverse to each other, a condenser C, a resistor R, and phototransistors Q1 and Q2. When the handset is raised and off-hooked in remote unit 3 or telephone portion 30, current is supplied to the telephone line. One of photocouplers PC1 or PC2 emits a light which is directed to one of phototransistors Q1 or Q2.

The connectors of phototransistors Q1 and Q2 are supplied with a constant current. The emitters are grounded via resistors R2 and R3. Light from photocoupler PC1 or PC2 directed to the base of phototransistors Q1 or Q2 causes phototransistors Q1 or Q2 to be turned on, whereby current flows to the emitter. This current is detected by control CPU 9. Thus, hook signal detecting circuit 55 detects whether the handset of remote unit 3 and telephone portion 30 is at an on-hook condition or not. This detected signal is supplied to CPU 9.

Hook signal detecting circuit 55 detects a power supplying halting signal from an exchanger indicating the termination of a communication. Hook signal detecting circuit 55 supplies this detected signal to CPU 9. CPU 9 controls facsimile apparatus 1 according to the signals from telephone line monitoring transformer T2 and hook signal detecting circuit 55.

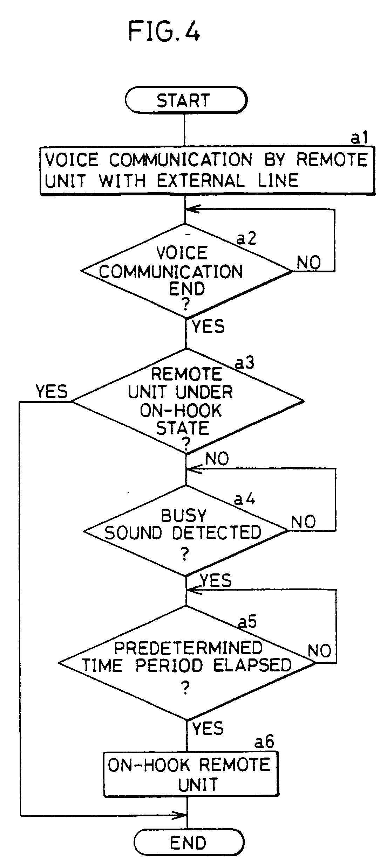

Fig. 4 is a flow chart for explaining the operation of facsimile apparatus 1. Referring to Fig. 4, voice communication is carried out via an external line using remote unit 3 at step a1. When the conversation button of mode setting key 54 of remote unit 3 is depressed, CPU 49 transmits a control signal to base unit 5 via transmission portion 44b. Base unit 5 has a MSK (Minimum Shift Keying) signal or a FSK (Frequency Shift Keying) signal received in receiving portion 38a demodulated by modem 39. This demodulated signal is supplied to CPU 40 as a hook signal. Upon receiving this hook signal, CPU 40 opens the direct current circuit of line portion 36 to connect base unit 5 to telephone line 6.

At step a2, control CPU 9 of facsimile communication portion 4 makes determination whether voice communication between remote unit 3 and the external line has terminated or not by monitoring the line condition of telephone line 6 by telephone line monitoring transformer T2. The program proceeds to step a3 when the voice communication ends. At step a3, control CPU 9 makes determination whether remote unit 3 is at an on-hook condition or not according to a hook condition detecting signal provided from CPU 40 of base unit 5 via insulation circuit 35 and FAX control ASIC 10. The process ends if remote unit 3 is at an on-hook condition. Otherwise, the program proceeds to step a4.

When a busy signal of 400Hz transmitted from an exchanger via telephone line monitoring transformer T2 and FAX modem 8 is detected by CPU 9 at step a4, the program proceeds to step a5, where determination is made whether a predetermined time period has elapsed or not. When determination is made that a predetermined time period has elapsed from the time point of the detection of a busy signal, control CPU 9 controls CPU 40 of base unit 5 via FAX control ASIC 10 and insulation circuit 35 to turn remote unit 3 to an on-hook condition. That is to say, CPU 40 of base unit 5 controls CPU 49 of remote unit 3 according to the control signal from control CPU 9 of facsimile apparatus 4 to force remote unit 3 to an on-hook condition.

Even when remote unit 3 is left at an off-hook condition for a long time due to not hanging up the telephone, i.e. forgetting to press the conversation button again of operation panel 50 after termination of voice communication with an external line, remote unit 3 is forced to recover to an on-hook condition upon detecting a busy signal transmitted from an exchanger. Even when remote unit 3 is left at an off-hook condition for a long time due to the depression of the conversation button for the intention of making a telephone call from remote unit 3, a busy signal is transmitted from an exchanger similarly. As a result, remote unit 3 is forced to recover to an on-hook state, as in the above described manner.

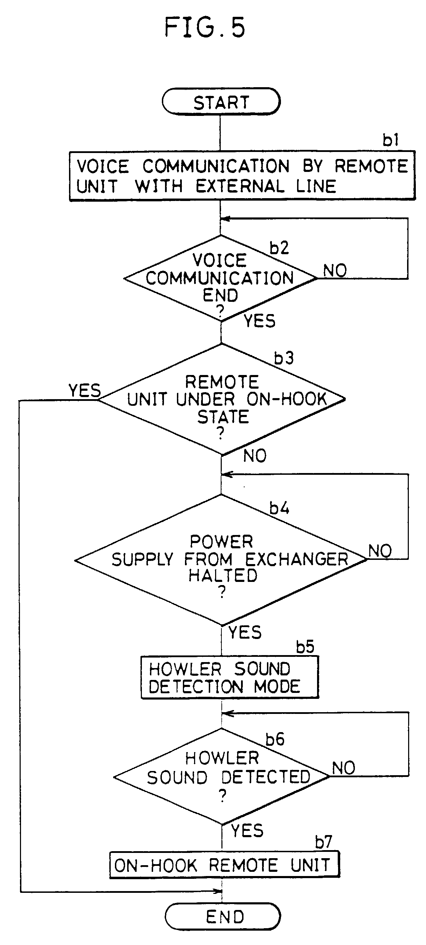

Fig. 5 is a flow chart for explaining another operation of facsimile apparatus 1. At step b1, voice communication is carried out by remote unit 3 with an external line. If the conversation button of mode setting key 54 of remote unit 3 is depressed, CPU 49 transmits a control signal to base unit 5 via communication portion 44b. Base unit 5 has a MSK signal or a FSK signal received in reception portion 38a demodulated by modem 39. This demodulated signal is supplied to CPU 40 as a hook signal. Accordingly, CPU 40 opens the direct current circuit of line circuit 36 to connect base unit 5 to telephone line 6.

At step b2, control CPU 9 monitors the line condition of telephone line 6 by telephone line monitoring transformer T2 to make determination whether voice communication of remote unit 3 with an external line has finished or not. If voice communication has finished, the program proceeds to step b3. At step b3, determination is made by control CPU 9 whether remote unit 3 is at an on-hook condition or not according to a hook condition detecting signal from CPU 40 of base unit 5 via insulation circuit 35 and FAX control ASIC 10. If remote unit 3 is at an on-hook condition, the process ends. Otherwise, the program proceeds to step b4.

At step b4, determination is made whether the power supply from the exchanger has halted according to a detected signal from hook signal detecting circuit 55. If power supply is suppressed, controller CPU 9 is set to a howler signal detecting mode at step b5.

When control CPU 9 detects a howler signal (a sine wave of 400Hz) transmitted from an exchanger via telephone line monitoring transformer T2 and FAX modem 8 at step b6, the program proceeds to step b7. At step b7, control CPU 9 controls the CPU 40 of base unit 5 via FAX control ASIC 10 and insulation circuit 35 to turn remote unit 3 to an on-hook condition. That is to say, CPU 40 of base unit 5 controls CPU 49 of remote unit 3 according to the control signal from control CPU 9 of facsimile apparatus 4 to force remote unit 3 to an on-hook condition.

Thus, the exchanger inhibits power supplying and transmits an howler signal even if the exchanger does not have the function to receive a busy signal, when the duration of the off-hook condition continues for a long time. Facsimile apparatus 1 forces remote unit 3 to turn to an on-hook condition when facsimile apparatus 1 detects an howler signal.

According to the present embodiment, remote unit 3 is forced to return to an on-hook condition when facsimile apparatus 1 detects a busy signal or a howler signal transmitted from an exchanger, when remote unit 3 is left at an off-hook condition for a long time period. Therefore, unnecessary holding of telephone line 6 by remote unit 3 continuing for a long time period can be prevented to efficiently utilize telephone line 6.

Although the present invention has been described and illustrated in detail, it is clearly understood that the same is by way of illustration and example only.

## Claims

1. A facsimile apparatus capable of performing both aural transmitting and receiving communication and image transmitting and receiving communication via a telephone line (6), comprising a telephone unit with a handset, a hook switch, communication condition detecting means and off-hook detecting means (55) for detecting the off-hook condition of the handset,
characterized in that the communication condition detecting means (9, 55) are arranged for detecting a signal transmitted from an exchanger indicating that the telephone line (6) is not under an aural or image communication condition, and
on-hook setting means (9, 10, 35, 40, 49) are provided for setting the handset to an on-hook condition, when said communication condition detecting means determines that the telephone line (6) is not under communication condition and when the off-hook detecting means detects an off-hook condition.

2. The facsimile apparatus according to claim 1, wherein
said telephone unit comprises a cordless telephone set (1, 5) and
said handset comprises a handset of a remote unit (1) of said cordless telephone set.

3. The facsimile apparatus according to claim 2, wherein said off-hook detecting means comprises a photocoupler (55) connected in series to said telephone line.

4. The facsimile apparatus according to claim 3, wherein said on-hook setting means (9, 10, 35, 40, 49) responds to an howler signal from said exchanger to set said handset to an on-hook condition.

5. The facsimile apparatus according to claim 3, wherein said on-hook setting means (9, 30, 35, 40, 49) responds to a busy signal from said exchanger to set said handset to an on-hook condition.

## Patentansprüche

1. Faksimile-Gerät, eingerichtet sowohl für Tonübertragung und -empfang von Nachrichten als auch für Bildübertragung und Bildempfang über eine Telefonleitung (6), welches eine Telefoneinheit mit einem Handapparat, einen Gabelumschalter, eine Erkennungseinrichtung für den Nachrichtenzustand und eine den Aushängezustand des Handapparats feststellende Aushänge-Erkennungseinrichtung (55) umfaßt, **dadurch gekennzeichnet**, daß die Erkennungseinrichtung (9, 55) ein von einer Vermittlungsstelle übertragenes Signal erkennt, welches anzeigt, daß die Telefonleitung (6) sich nicht in einem Zustand für Ton- oder Bildübertragung befindet, und daß Einstelleinrichtungen (9, 10, 35, 40, 49) vorgesehen sind zur Einstellung des Handapparats in einen Einhänge-Zustand, wenn die Erkennungseinrichtung erkennt, daß die Telefonleitung (6) sich nicht im Übertragungszustand befindet und wenn die Aushänge-Erkennungseinrichtung einen Aushänge-Zustand erkennt.

2. Faksimile-Gerät nach Anspruch 1, bei dem die Telefoneinheit ein schnurloses Telefonset (1, 5) aufweist und der Handapparat einen Handapparat einer entfernten Einheit (1) des schnurlosen Telefonsets einschließt.

3. Faksimile-Gerät nach Anspruch 2, bei dem die Aushänge-Erkennungseinrichtung einen Fotokoppler (55) enthält, der in Serie mit der Telefonleitung geschaltet ist.

4. Faksimile-Gerät nach Anspruch 3, bei dem die Einhänge-Setzeinrichtungen (9, 10, 35, 40, 49) auf ein Daueraushängesignal von der Vermittlungsstelle reagieren, um den Handapparat in den Einhängezustand zu setzen.

5. Faksimile-Gerät nach Anspruch 3, bei dem die Einhänge-Setzeinrichtungen (9, 30, 35, 40, 49) auf einen Besetztton von der Vermittlungsstelle reagieren, um den Handapparat in einen Einhängezustand zu setzen.

## Revendications

1. Appareil de télécopie capable de réaliser aussi bien la communication d'émission et de réception sonore et la communication d'émission et de réception d'image via une ligne téléphonique (6), comprenant un élément téléphonique avec un combiné, un commutateur de raccrochage/décrochage, des moyens de détection d'état de communication et un moyen de détection d'état de décrochage (55) pour détecter l'état de décrochage du combiné,
caractérisé en ce que les moyens de détection d'état de communication (9, 55) sont prévus pour la détection d'un signal transmis d'un échangeur indiquant que la ligne téléphonique (6) n'est pas sous un état de communication sonore ou d'image, et
des moyens de raccrochage (9, 10, 35, 40, 49) sont fournis pour mettre le combiné à un état de raccrochage, lorsque ledit moyen de détection d'état de communication détermine que la ligne téléphonique (6) n'est pas en état de communication et lorsque le moyen de détection de décrochage détecte un état de décrochage.

2. Appareil de télécopie selon la revendication 1, dans lequel ledit élément téléphonique comprend une installation téléphonique sans fil (1, 5) et
ledit combiné comprend un combiné d'une élément déporté (1) de ladite installation téléphonique sans fil.

3. Appareil de télécopie selon la revendication 2, dans lequel ledit moyen de détection de décrochage comprend un photo-coupleur (55) connecté en série à ladite ligne téléphonique.

4. Appareil de télécopie selon la revendication 3, dans lequel lesdits moyens de raccrochage (9, 10, 35, 40, 49) répondent à un signal hurleur dudit échangeur pour mettre ledit combiné en état de raccrochage.

5. Appareil de télécopie selon la revendication 3, dans lequel lesdits moyens de raccrochage (9, 30, 35, 40, 49) répondent au signal d'occupation dudit échangeur pour mettre ledit combiné en un état de raccrochage.
